# EUROPEAN PATENT APPLICATION

(11) **EP 4 722 910 A1**
(43) Date of publication of application: **08.04.2026**
(21) Application number: 24830995.7
(22) Date of filing: 28.06.2024
(51) Int. Cl.: G06F 9/50

(54) **CLOUD MANAGEMENT PLATFORM-BASED CONTAINER MANAGEMENT METHOD AND CLOUD MANAGEMENT PLATFORM**

(30) Priority: 29.06.2023 CN 202310786221; 23.08.2023 CN 202311068509
(71) Applicant: Huawei Cloud Computing Technologies Co., Ltd., Guiyang, Guizhou, 550025 (CN)
(72) Inventor: ZHANG, Jiawei, Guiyang, Guizhou 550025 (CN); ZHANG, Hao, Guiyang, Guizhou 550025 (CN); GUO, Lei, Guiyang, Guizhou 550025 (CN); ZHANG, Qi, Guiyang, Guizhou 550025 (CN); ANSARI, Zain Us Sami Ahmed, Guiyang, Guizhou 550025 (CN); ALKHATIB, Basil Y O, Guiyang, Guizhou 550025 (CN)
(74) Representative: Pfenning, Meinig & Partner mbB
(86) International application number: PCT/CN2024/102422
(87) International publication number: WO 2025/002366

(57) **Abstract**

This application discloses a container management method based on a cloud management platform and a cloud management platform, so that operation costs of the cloud management platform can be reduced while a container creation speed is ensured. The method in this application includes: The cloud management platform obtains, from a container configuration interface, configuration information that is of a to-be-created container and that is input by a tenant, where the configuration information indicates a requirement of the tenant on the container. The cloud management platform obtains status information of a plurality of resource pools, where the status information indicates performance of the plurality of resource pools. The cloud management platform selects, from the plurality of resource pools based on the configuration information and the status information, a first resource pool whose performance meets the requirement. The cloud management platform determines, from a plurality of prewarming levels, a first prewarming level that matches the tenant, and if a first cloud instance corresponding to the first prewarming level exists in a plurality of cloud instances in the first resource pool, the cloud management platform creates the container in the first cloud instance.

## Description

This application claims priorities to Chinese Patent Application No. 202310786221.5, filed with the China National Intellectual Property Administration on June 29, 2023 and entitled "RESOURCE POOL SCHEDULING METHOD BASED ON CLOUD MANAGEMENT PLATFORM", and to Chinese Patent Application No. 202311068509.5, filed with the China National Intellectual Property Administration on August 23, 2023 and entitled "CONTAINER MANAGEMENT METHOD BASED ON CLOUD MANAGEMENT PLATFORM AND CLOUD MANAGEMENT PLATFORM", both of which are incorporated herein by reference in their entireties.

### TECHNICAL FIELD

Embodiments of this application relate to the field of cloud technologies, and in particular, to a container management method based on a cloud management platform and a cloud management platform.

### BACKGROUND

Due to characteristics such as extremely fast provisioning speed and charging based on usage time of containers, the containers have gradually become an important implementation for a cloud management platform to provide cloud services for tenants. While convenience is provided for the tenants, cloud vendors undertake operation costs of the cloud management platform.

In related technologies, a cloud service system includes a cloud management platform and a plurality of physical servers, and virtual machines (virtual machines, VMs) have been deployed on these physical servers in advance. When tenants need to create containers, the cloud management platform may select, based on requests of the tenants, a physical server from the plurality of physical servers, and create, in a virtual machine on the physical server, the containers needed by the tenants. In this case, these containers may run applications or microservices of the tenants, to provide cloud services such as data storage, data computing, and data download for the tenants.

In the foregoing cloud service system, the cloud management platform has created and started the virtual machine on the physical server, which is equivalent to providing a creation environment for creating the containers. Therefore, a container creation speed can be improved. However, an unused virtual machine on the physical server causes additional operation costs of the cloud management platform.

### SUMMARY

Embodiments of this application provide a container management method based on a cloud management platform and a cloud management platform, so that operation costs of the cloud management platform can be reduced while a container creation speed is ensured.

A first aspect of embodiments of this application provides a container management method based on a cloud management platform, where the cloud management platform is configured to manage an infrastructure that provides a cloud service, the infrastructure includes a plurality of resource pools, each resource pool includes a plurality of cloud instances corresponding to at least one of a plurality of prewarming levels, the plurality of prewarming levels indicate a plurality of prewarming degrees of cloud instances, and the method includes:

When a tenant needs to create a container, the cloud management platform may provide a container configuration interface for the tenant. Then, the tenant may send configuration information of the to-be-created container to the container configuration interface, so that the cloud management platform receives, through the container configuration interface, the configuration information sent by the tenant, where the configuration information indicates a requirement of the tenant on the container. In this case, the cloud management platform may determine, based on the configuration information of the container, that the container needs to be created for the tenant. Then, the cloud management platform may obtain status information of the plurality of resource pools managed by the cloud management platform, where the status information indicates performance of the plurality of resource pools.

After obtaining the configuration information of the container and the status information of the plurality of resource pools, the cloud management platform may parse the configuration information of the container, to determine the requirement of the tenant on the container, and parse the status information of the plurality of resource pools, to determine the performance of the plurality of resource pools. Then, the cloud management platform may select, from the plurality of resource pools, a first resource pool whose performance can meet the requirement of the tenant on the container.

After determining the first resource pool, the cloud management platform may determine, from the plurality of prewarming levels, a first prewarming level that matches the tenant, namely, a prewarming level that can be used by the tenant. After obtaining the first prewarming level, because the first resource pool includes a plurality of cloud instances corresponding to at least one prewarming level, if a first cloud instance corresponding to the first prewarming level exists in the plurality of cloud instances, the cloud management platform starts the first cloud instance and creates the container in the first cloud instance. In this case, the cloud management platform successfully completes a container creation task of the tenant.

It can be learned from the foregoing method that the cloud management platform manages the plurality of resource pools of different types, and the plurality of cloud instances included in each resource pool have been prewarmed to at least one degree (in other words, the plurality of cloud instances included in each resource pool correspond to at least one prewarming level). After determining that the tenant needs to create the container, the cloud management platform may select an appropriate resource pool (namely, the first resource pool) for the tenant, and select, from a plurality of cloud instances in the resource pool, a cloud instance (namely, the first cloud instance) corresponding to a prewarming level that can be used by the tenant (namely, the first prewarming level). Because the cloud instance has been prewarmed to a specific degree but is not completely started, the cloud management platform can quickly and completely start the cloud instance and create the container. This ensures a container creation speed, and can further reduce operation costs of the cloud management platform.

In a possible implementation, the plurality of resource pools include at least two of the following: a virtual machine resource pool, a bare metal server resource pool, a physical server resource pool, and a micro virtual machine resource pool, where the virtual machine resource pool includes a plurality of virtual machines, the bare metal server resource pool includes a plurality of bare metal servers, the physical server resource pool includes a plurality of physical servers, and the micro virtual machine resource pool includes a plurality of micro virtual machines. In the foregoing implementation, the cloud management platform may manage the plurality of resource pools of different types, including at least two types of the following resource pools: the virtual machine resource pool, the bare metal server resource pool, the physical server resource pool, and the micro virtual machine resource pool. For the virtual machine resource pool, the plurality of virtual machines included in the virtual machine resource pool all may be considered as creation environments of the container, and the plurality of virtual machines are prewarmed to at least one degree. Therefore, the cloud management platform can quickly start these virtual machines and create the container in the virtual machines. For the bare metal server resource pool, the plurality of bare metal servers included in the bare metal server resource pool all may be considered as creation environments of the container, and the plurality of bare metal servers are prewarmed to at least one degree. Therefore, the cloud management platform can quickly start these bare metal servers and create the container in the bare metal servers. For the physical server resource pool, the plurality of physical servers included in the physical server resource pool all may be considered as creation environments of the container, and the plurality of physical servers are prewarmed to at least one degree. Therefore, the cloud management platform can quickly start these physical servers and create the container in the physical servers. For the micro virtual machine resource pool, the plurality of micro virtual machines included in the micro virtual machine resource pool all may be considered as creation environments of the container, and the plurality of micro virtual machines are prewarmed to at least one degree. Therefore, the cloud management platform can quickly start these micro virtual machines and create the container in the micro virtual machines. It can be learned that the cloud management platform provides sufficient resources for the tenant, to meet a container creation requirement of a user.

In a possible implementation, the plurality of prewarming levels include: directional prewarming, service prewarming, non-directional prewarming, and shutdown prewarming sorted in descending order of levels, where a prewarming degree of a cloud instance indicated by the directional prewarming is higher than a prewarming degree of a cloud instance indicated by the service prewarming, the prewarming degree of the cloud instance indicated by the service prewarming is higher than a prewarming degree of a cloud instance indicated by the non-directional prewarming, and the prewarming degree of the cloud instance indicated by the non-directional prewarming is higher than a prewarming degree of a cloud instance indicated by the shutdown prewarming. In the foregoing implementation, the shutdown prewarming, non-directional prewarming, service prewarming, and directional prewarming sorted in ascending order of levels are set in the cloud management platform. The shutdown prewarming indicates that a cloud instance in a resource pool has been created but is in a shutdown state. In this case, the cloud instance has the lowest prewarming degree. The non-directional prewarming indicates that a cloud instance in a resource pool has been created and is in a running state, but a service component and tenant information that are needed for creating a container are not loaded. In this case, the cloud instance has a low prewarming degree. The service prewarming indicates that a cloud instance in a resource pool has been created, and a service component is loaded. In this case, the cloud instance has a high prewarming degree. The directional prewarming indicates that a cloud instance in a resource pool has been created, and a service component and tenant information that are needed for creating a container are loaded. In this case, the cloud instance has the highest prewarming degree. A higher prewarming degree of a cloud instance indicates shorter container creation time (a faster container creation speed) and higher operation costs. On the contrary, a lower prewarming degree of a cloud instance indicates longer container creation time (a slower container creation speed) and lower operation costs. The cloud management platform sets a plurality of cloud instances with different prewarming degrees for a resource pool, to select an appropriate cloud instance to create a container for the tenant. This can ensure the container creation speed, and can further reduce the operation costs of the cloud management platform. In other words, this ensures a balance between user experience and the operation costs.

In a possible implementation, the method further includes: if the first cloud instance corresponding to the first prewarming level does not exist in the plurality of cloud instances in the first resource pool, and a second cloud instance corresponding to a second prewarming level exists in the plurality of cloud instances in the first resource pool, creating the container in the second cloud instance, where the plurality of prewarming levels include the second prewarming level, and the second prewarming level is higher than the first prewarming level. In the foregoing implementation, if the first cloud instance corresponding to the first prewarming level does not exist in the plurality of cloud instances in the first resource pool, the cloud management platform allows the tenant to be upward compatible with a prewarming level. To be specific, the cloud management platform determines the second prewarming level higher than the first prewarming level, and determines whether the second cloud instance corresponding to the second prewarming level exists in the plurality of cloud instances in the first resource pool. If the second cloud instance corresponding to the second prewarming level exists in the plurality of cloud instances in the first resource pool, the cloud management platform starts the second cloud instance and creates the container in the second cloud instance. In this case, the cloud management platform successfully completes the container creation task of the tenant.

In a possible implementation, the requirement includes a startup latency of the container, and determining, from the plurality of prewarming levels, the first prewarming level that matches the tenant includes: determining, from a plurality of latency ranges, a first latency range within which the startup latency falls; and determining, from the plurality of prewarming levels based on a correspondence between the plurality of latency ranges and the plurality of prewarming levels, the first prewarming level corresponding to the first latency range. In the foregoing implementation, the cloud management platform may determine, based on the configuration information of the container, the startup latency of the container needed by the tenant. Because a plurality of latency ranges are preset in the cloud management platform, the cloud management platform may obtain the plurality of preset latency ranges. Then, the cloud management platform may determine, from the plurality of latency ranges, the first latency range within which the startup latency of the container needed by the tenant falls. Because the correspondence between the plurality of latency ranges and the plurality of prewarming levels is further preset in the cloud management platform, the cloud management platform may determine, from the plurality of prewarming levels based on the correspondence, the first prewarming level corresponding to the first latency range.

In a possible implementation, determining, from the plurality of prewarming levels, the first prewarming level that matches the tenant includes: obtaining a first tenant level of the tenant, where the first tenant level indicates an importance degree of the tenant; and determining, from the plurality of prewarming levels based on a correspondence between a plurality of tenant levels and the plurality of prewarming levels, the first prewarming level corresponding to the first tenant level, where the plurality of tenant levels include the first tenant level. In the foregoing implementation, when a prewarming level that can be used by the tenant needs to be determined, the cloud management platform may first obtain the first tenant level of the tenant. Because the correspondence between the plurality of tenant levels and the plurality of prewarming levels is further preset in the cloud management platform, the cloud management platform may determine, from the plurality of prewarming levels based on the correspondence, the first prewarming level corresponding to the first tenant level.

In a possible implementation, the tenant is a tenant in a trustlist, and determining, from the plurality of prewarming levels, the first prewarming level that matches the tenant includes: determining, from the plurality of prewarming levels, the first prewarming level corresponding to the trustlist. In the foregoing implementation, the cloud management platform may set a tenant trustlist. If the tenant is in the trustlist, the cloud management platform may determine, from the plurality of prewarming levels, the first prewarming level corresponding to the trustlist, namely, the prewarming level that can be used by the tenant.

In a possible implementation, the requirement of the tenant on the container includes at least one of the following: a specification of the container, the startup latency of the container, and the like.

In a possible implementation, the performance of the plurality of resource pools includes at least one of the following: capacities of the plurality of resource pools, container creation time of the plurality of resource pools, and the like.

A second aspect of embodiments of this application provides a cloud management platform, where the cloud management platform is configured to manage an infrastructure that provides a cloud service, the infrastructure includes a plurality of resource pools, each resource pool includes a plurality of cloud instances corresponding to at least one of a plurality of prewarming levels, the plurality of prewarming levels indicate a plurality of prewarming degrees of cloud instances, and the cloud management platform includes: a first obtaining module, configured to obtain, from a container configuration interface, configuration information that is of a to-be-created container and that is input by a tenant, where the configuration information indicates a requirement of the tenant on the container; a second obtaining module, configured to obtain status information of the plurality of resource pools, where the status information indicates performance of the plurality of resource pools; a selection module, configured to select, from the plurality of resource pools based on the configuration information and the status information, a first resource pool whose performance meets the requirement; and a creation module, configured to: determine, from the plurality of prewarming levels, a first prewarming level that matches the tenant, and if a first cloud instance corresponding to the first prewarming level exists in a plurality of cloud instances in the first resource pool, create the container in the first cloud instance.

It can be learned from the foregoing cloud management platform that, when the tenant needs to create the container, the tenant may input the configuration information of the to-be-created container to the container configuration interface provided by the cloud management platform, where the configuration information indicates the requirement of the tenant on the container. After receiving the configuration information of the container, the cloud management platform may obtain the status information of the plurality of resource pools, where the status information indicates the performance of the plurality of resource pools. Then, the cloud management platform may select, from the plurality of resource pools based on the configuration information of the container and the status information of the plurality of resource pools, the first resource pool whose performance meets the requirement of the tenant on the container. Then, the cloud management platform may determine, from the plurality of prewarming levels, the first prewarming level that matches the tenant. If the first cloud instance corresponding to the first prewarming level exists in the plurality of cloud instances in the first resource pool, the cloud management platform creates the container in the first cloud instance. In this case, the cloud management platform may successfully create the container needed by the tenant. In the foregoing process, the cloud management platform manages the plurality of resource pools of different types, and the plurality of cloud instances included in each resource pool have been prewarmed to at least one degree (in other words, the plurality of cloud instances included in each resource pool correspond to at least one prewarming level). After determining that the tenant needs to create the container, the cloud management platform may select an appropriate resource pool (namely, the first resource pool) for the tenant, and select, from a plurality of cloud instances in the resource pool, a cloud instance (namely, the first cloud instance) corresponding to a prewarming level that can be used by the tenant (namely, the first prewarming level). Because the cloud instance has been prewarmed to a specific degree but is not completely started, the cloud management platform can quickly and completely start the cloud instance and create the container. This ensures a container creation speed, and can further reduce operation costs of the cloud management platform.

In a possible implementation, the plurality of resource pools include at least two of the following: a virtual machine resource pool, a bare metal server resource pool, a physical server resource pool, and a micro virtual machine resource pool, where the virtual machine resource pool includes a plurality of virtual machines, the bare metal server resource pool includes a plurality of bare metal servers, the physical server resource pool includes a plurality of physical servers, and the micro virtual machine resource pool includes a plurality of micro virtual machines.

In a possible implementation, the plurality of prewarming levels include: directional prewarming, service prewarming, non-directional prewarming, and shutdown prewarming sorted in descending order of levels, where a prewarming degree of a cloud instance indicated by the directional prewarming is higher than a prewarming degree of a cloud instance indicated by the service prewarming, the prewarming degree of the cloud instance indicated by the service prewarming is higher than a prewarming degree of a cloud instance indicated by the non-directional prewarming, and the prewarming degree of the cloud instance indicated by the non-directional prewarming is higher than a prewarming degree of a cloud instance indicated by the shutdown prewarming.

In a possible implementation, the creation module is further configured to: if the first cloud instance corresponding to the first prewarming level does not exist in the plurality of cloud instances in the first resource pool, and a second cloud instance corresponding to a second prewarming level exists in the plurality of cloud instances in the first resource pool, create the container in the second cloud instance, where the plurality of prewarming levels include the second prewarming level, and the second prewarming level is higher than the first prewarming level.

In a possible implementation, the requirement includes a startup latency of the container, and the selection module is configured to: determine, from a plurality of latency ranges, a first latency range within which the startup latency falls; and determine, from the plurality of prewarming levels based on a correspondence between the plurality of latency ranges and the plurality of prewarming levels, the first prewarming level corresponding to the first latency range.

In a possible implementation, the selection module is configured to: obtain a first tenant level of the tenant, where the first tenant level indicates an importance degree of the tenant; and determine, from the plurality of prewarming levels based on a correspondence between a plurality of tenant levels and the plurality of prewarming levels, the first prewarming level corresponding to the first tenant level, where the plurality of tenant levels include the first tenant level.

In a possible implementation, the tenant is a tenant in a trustlist, and the selection module is configured to determine, from the plurality of prewarming levels, the first prewarming level corresponding to the trustlist.

In a possible implementation, the requirement includes at least one of the following: a specification of the container and the startup latency of the container.

In a possible implementation, the performance includes at least one of the following: capacities of the plurality of resource pools and container creation time of the plurality of resource pools.

A third aspect of embodiments of this application provides a cloud service system, where the cloud service system includes a cloud management platform and an infrastructure that provides a cloud service, the cloud management platform is configured to manage the infrastructure, the infrastructure includes a plurality of resource pools, each resource pool includes a plurality of cloud instances corresponding to at least one of a plurality of prewarming levels, the plurality of prewarming levels indicate a plurality of prewarming degrees of cloud instances, and the cloud management platform is configured to: obtain, from a container configuration interface, configuration information that is of a to-be-created container and that is input by a tenant, where the configuration information indicates a requirement of the tenant on the container; obtain status information of the plurality of resource pools, where the status information indicates performance of the plurality of resource pools; select, from the plurality of resource pools based on the configuration information and the status information, a first resource pool whose performance meets the requirement; and determine, from the plurality of prewarming levels, a first prewarming level that matches the tenant, and if a first cloud instance corresponding to the first prewarming level exists in a plurality of cloud instances in the first resource pool, create the container in the first cloud instance.

It can be learned from the foregoing cloud service system that when the tenant needs to create the container, the tenant may input the configuration information of the to-be-created container to the container configuration interface provided by the cloud management platform, where the configuration information indicates the requirement of the tenant on the container. After receiving the configuration information of the container, the cloud management platform may obtain the status information of the plurality of resource pools, where the status information indicates the performance of the plurality of resource pools. Then, the cloud management platform may select, from the plurality of resource pools based on the configuration information of the container and the status information of the plurality of resource pools, the first resource pool whose performance meets the requirement of the tenant on the container. Then, the cloud management platform may determine, from the plurality of prewarming levels, the first prewarming level that matches the tenant. If the first cloud instance corresponding to the first prewarming level exists in the plurality of cloud instances in the first resource pool, the cloud management platform creates the container in the first cloud instance. In this case, the cloud management platform may successfully create the container needed by the tenant. In the foregoing process, the cloud management platform manages the plurality of resource pools of different types, and the plurality of cloud instances included in each resource pool have been prewarmed to at least one degree (in other words, the plurality of cloud instances included in each resource pool correspond to at least one prewarming level). After determining that the tenant needs to create the container, the cloud management platform may select an appropriate resource pool (namely, the first resource pool) for the tenant, and select, from a plurality of cloud instances in the resource pool, a cloud instance (namely, the first cloud instance) corresponding to a prewarming level that can be used by the tenant (namely, the first prewarming level). Because the cloud instance has been prewarmed to a specific degree but is not completely started, the cloud management platform can quickly and completely start the cloud instance and create the container. This ensures a container creation speed, and can further reduce operation costs of the cloud management platform.

In a possible implementation, the plurality of resource pools include at least two of the following: a virtual machine resource pool, a bare metal server resource pool, a physical server resource pool, and a micro virtual machine resource pool, where the virtual machine resource pool includes a plurality of virtual machines, the bare metal server resource pool includes a plurality of bare metal servers, the physical server resource pool includes a plurality of physical servers, and the micro virtual machine resource pool includes a plurality of micro virtual machines.

In a possible implementation, the plurality of prewarming levels include: directional prewarming, service prewarming, non-directional prewarming, and shutdown prewarming sorted in descending order of levels, where a prewarming degree of a cloud instance indicated by the directional prewarming is higher than a prewarming degree of a cloud instance indicated by the service prewarming, the prewarming degree of the cloud instance indicated by the service prewarming is higher than a prewarming degree of a cloud instance indicated by the non-directional prewarming, and the prewarming degree of the cloud instance indicated by the non-directional prewarming is higher than a prewarming degree of a cloud instance indicated by the shutdown prewarming.

In a possible implementation, the cloud management platform is further configured to: if the first cloud instance corresponding to the first prewarming level does not exist in the plurality of cloud instances in the first resource pool, and a second cloud instance corresponding to a second prewarming level exists in the plurality of cloud instances in the first resource pool, create the container in the second cloud instance, where the plurality of prewarming levels include the second prewarming level, and the second prewarming level is higher than the first prewarming level.

In a possible implementation, the requirement includes a startup latency of the container, and the cloud management platform is configured to: determine, from a plurality of latency ranges, a first latency range within which the startup latency falls; and determine, from the plurality of prewarming levels based on a correspondence between the plurality of latency ranges and the plurality of prewarming levels, the first prewarming level corresponding to the first latency range.

In a possible implementation, the cloud management platform is configured to: obtain a first tenant level of the tenant, where the first tenant level indicates an importance degree of the tenant; and determine, from the plurality of prewarming levels based on a correspondence between a plurality of tenant levels and the plurality of prewarming levels, the first prewarming level corresponding to the first tenant level, where the plurality of tenant levels include the first tenant level.

In a possible implementation, the tenant is a tenant in a trustlist, and the cloud management platform is configured to determine, from the plurality of prewarming levels, the first prewarming level corresponding to the trustlist.

In a possible implementation, the requirement includes at least one of the following: a specification of the container and the startup latency of the container.

In a possible implementation, the performance includes at least one of the following: capacities of the plurality of resource pools and container creation time of the plurality of resource pools.

A fourth aspect of embodiments of this application provides a computing device cluster, where the computing device cluster includes at least one computing device, and each computing device includes a processor and a storage. The storage is configured to store instructions. The processor is configured to enable, according to the instructions, the computing device cluster to perform the method according to any one of the first aspect or the possible implementations of the first aspect.

A fifth aspect of embodiments of this application provides a computer storage medium, where the computer storage medium stores one or more instructions. When the instructions are executed by one or more computers, the one or more computers are enabled to implement the method according to any one of the first aspect or the possible implementations of the first aspect.

A sixth aspect of embodiments of this application provides a computer program product, where the computer program product stores instructions. When the instructions are executed by a computer, the computer is enabled to implement the method according to any one of the first aspect or the possible implementations of the first aspect.

In embodiments of this application, when a tenant needs to create a container, the tenant may input configuration information of the to-be-created container to a container configuration interface provided by a cloud management platform, where the configuration information indicates a requirement of the tenant on the container. After receiving the configuration information of the container, the cloud management platform may obtain status information of a plurality of resource pools, where the status information indicates performance of the plurality of resource pools. Then, the cloud management platform may select, from the plurality of resource pools based on the configuration information of the container and the status information of the plurality of resource pools, a first resource pool whose performance meets the requirement of the tenant on the container. Then, the cloud management platform may determine, from a plurality of prewarming levels, a first prewarming level that matches the tenant. If a first cloud instance corresponding to the first prewarming level exists in a plurality of cloud instances in the first resource pool, the cloud management platform creates the container in the first cloud instance. In this case, the cloud management platform may successfully create the container needed by the tenant. In the foregoing process, the cloud management platform manages the plurality of resource pools of different types, and a plurality of cloud instances included in each resource pool have been prewarmed to at least one degree (in other words, the plurality of cloud instances included in each resource pool correspond to at least one prewarming level). After determining that the tenant needs to create the container, the cloud management platform may select an appropriate resource pool (namely, the first resource pool) for the tenant, and select, from a plurality of cloud instances in the resource pool, a cloud instance (namely, the first cloud instance) corresponding to a prewarming level that can be used by the tenant (namely, the first prewarming level). Because the cloud instance has been prewarmed to a specific degree but is not completely started, the cloud management platform can quickly and completely start the cloud instance and create the container. This ensures a container creation speed, and can further reduce operation costs of the cloud management platform.

### BRIEF DESCRIPTION OF DRAWINGS

FIG. 1 is a diagram of a structure of a cloud service system according to an embodiment of this application;
FIG. 2 is a diagram of a structure of a cloud instance according to an embodiment of this application;
FIG. 3 is a diagram of another structure of a cloud instance according to an embodiment of this application;
FIG. 4 is a diagram of another structure of a cloud instance according to an embodiment of this application;
FIG. 5 is a diagram of another structure of a cloud instance according to an embodiment of this application;
FIG. 6 is a diagram of another structure of a cloud service system according to an embodiment of this application;
FIG. 7 shows a container management method based on a cloud management platform according to an embodiment of this application;
FIG. 8 is a diagram of another structure of a cloud service system according to an embodiment of this application;
FIG. 9 is a diagram of another structure of a cloud service system according to an embodiment of this application;
FIG. 10 is a diagram of a structure of a cloud management platform according to an embodiment of this application;
FIG. 11 is a diagram of a structure of a computing device according to an embodiment of this application;
FIG. 12 is a diagram of a structure of a computing device cluster according to an embodiment of this application; and
FIG. 13 is a diagram in which computer devices in a computer cluster are connected through a network according to an embodiment of this application.

### DESCRIPTION OF EMBODIMENTS

Embodiments of this application provide a container management method based on a cloud management platform and a cloud management platform, so that operation costs of the cloud management platform can be reduced while a container creation speed is ensured.

In the specification, claims, and accompanying drawings of this application, terms "first", "second", and the like are intended to distinguish between similar objects but do not necessarily indicate a specific order or sequence. It should be understood that the terms used in such a way are interchangeable in proper circumstances, which is merely a discrimination manner that is used when objects having a same attribute are described in embodiments of this application. In addition, terms "include", "have" and any other variants mean to cover the non-exclusive inclusion, so that a process, method, system, product, or device that includes a series of units is not necessarily limited to those units, but may include other units not expressly listed or inherent to such a process, method, product, or device.

Due to characteristics such as extremely fast provisioning speed and charging based on usage time of containers, the containers have gradually become an important implementation for a cloud management platform to provide cloud services for tenants. While convenience is provided for the tenants, cloud vendors undertake operation costs of the cloud management platform.

In related technologies, a cloud service system includes a cloud management platform and a plurality of physical servers, and one or more virtual machines have been deployed on these physical servers in advance. When tenants need to create containers, the tenants may send requests to the cloud management platform. Then, the cloud management platform may select, based on the requests from the tenants, a physical server from the plurality of physical servers, and create, in a virtual machine on the physical server, the containers needed by the tenants. In this case, these containers may run applications or microservices of the tenants, to provide cloud services such as data storage, data computing, and data download for the tenants.

In the foregoing cloud service system, because the cloud management platform has created and started the virtual machine on the physical server, for the selected physical server, the virtual machine deployed on the selected physical server provides a creation environment for creating the containers, and may improve a container creation speed. However, for unselected physical servers, when a virtual machine on the physical servers is not used, additional operation costs of the cloud management platform are caused.

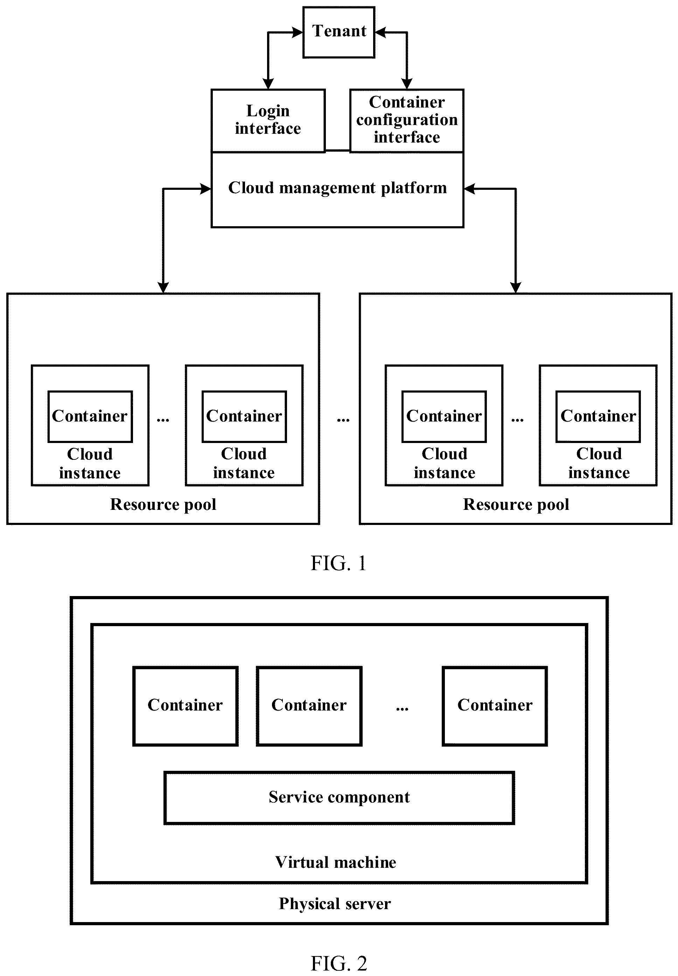

To resolve the foregoing problem, embodiments of this application provide a container management method based on a cloud management platform. The method may be implemented by the cloud management platform in the cloud service system. FIG. 1 is a diagram of a structure of a cloud service system according to an embodiment of this application. As shown in FIG. 1, the cloud service system includes an infrastructure that can provide a cloud service and a cloud management platform that manages the infrastructure. The following separately describes the cloud management platform and the infrastructure.

The cloud management platform may manage a plurality of resource pools in the entire cloud service system in a unified manner (for example, select a resource pool from the plurality of resource pools, then select a cloud instance from the resource pool, and create a container (docker) in the cloud instance). The cloud management platform may also be opened to tenants outside the system and respond to their requests. For example, the cloud management platform may provide various interfaces such as a login interface and a container configuration interface for a client of a tenant (for example, a terminal device used by the tenant or a browser on the terminal device) to access. The cloud management platform may perform identity authentication on the client of the tenant through the login interface. After the identity authentication succeeds, the client of the tenant may be allowed to log in to the cloud management platform. The cloud management platform may further allow, through the container configuration interface, the client of the tenant to send container configuration information to the cloud management platform. Based on the configuration information, the cloud management platform may select an appropriate resource pool for the tenant from the plurality of resource pools, then select an appropriate cloud instance from a plurality of cloud instances included in the resource pool, and then create, on the cloud instance, one or more containers for providing a cloud service for the tenant. In this case, the container may run corresponding applications, microservices, or the like to process a service of a user, to meet a service processing requirement of the user.

The infrastructure includes the plurality of resource pools of different types that can be selected by the cloud management platform, and each resource pool includes a specific quantity of cloud instances. The cloud management platform may select, under an indication of the client of the tenant, a resource pool for the tenant from the plurality of resource pools, and select a cloud instance from a plurality of cloud instances included in the resource pool, to create one or more dedicated containers for the tenant on the cloud instance, so that the container provides a cloud service for the tenant. The plurality of resource pools included in the infrastructure may be separately disposed in a plurality of regions (regions), a plurality of availability zones (availability zones), or the like.

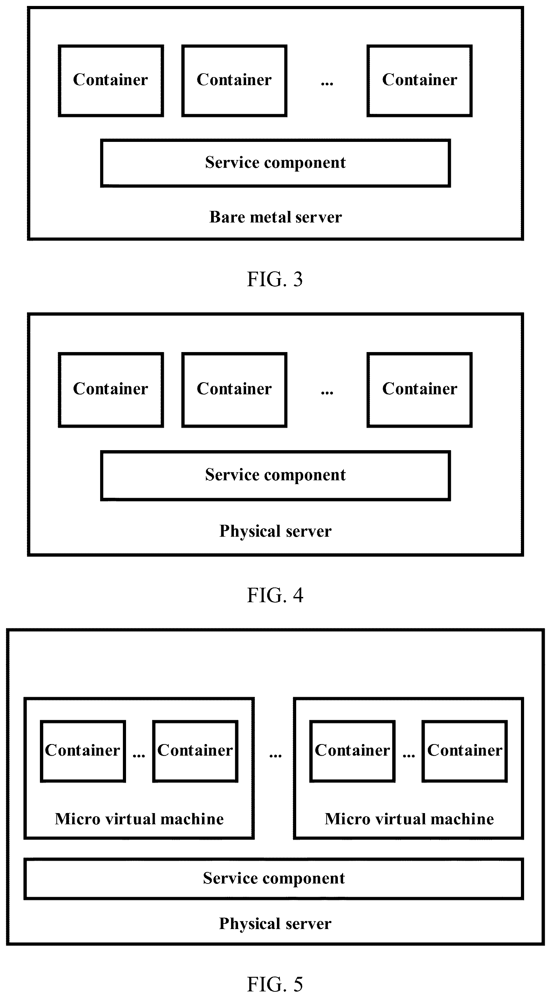

Further, the plurality of resource pools included in the infrastructure may include at least two of the following: a virtual machine resource pool, a bare metal server (bare metal server, BMS) resource pool, a physical server resource pool, and a micro virtual machine (microVM) resource pool. Therefore, the infrastructure may include at least two different types of resource pools. The following separately describes the four types of resource pools:
(1) For the virtual machine resource pool, the virtual machine resource pool may include a plurality of physical servers. Components such as a central processing unit (central processing unit, CPU), a graphics processing unit (graphics processing unit, GPU), a memory, and a network interface card of the plurality of physical servers are resources in the virtual machine resource pool. The cloud management platform may implement a virtualization technology on these hardware resources, to deploy a plurality of virtual machines in the plurality of physical servers and deploy a plurality of containers in the plurality of virtual machines. It should be noted that the plurality of virtual machines included in the virtual machine resource pool may also be understood as a plurality of cloud instances included in the virtual machine resource pool.
   For the plurality of virtual machines included in the virtual machine resource pool, any virtual machine may be considered as a container creation environment. As shown in FIG. 2 (FIG. 2 is a diagram of a structure of a cloud instance according to an embodiment of this application), for any virtual machine in the plurality of virtual machines, the cloud management platform may deploy a service component (service-agent) in the virtual machine. Therefore, the cloud management platform may manage one or more containers (for example, container creation and deletion, certificate key management, connection to an upper-layer service, and container health monitoring) in the virtual machine in a unified manner by using the service component.
(2) For the bare metal server resource pool, the bare metal server resource pool may include a plurality of bare metal servers. Components such as a CPU, a GPU, a memory, and a network interface card of the plurality of bare metal servers are resources in the virtual machine resource pool. The cloud management platform may implement a virtualization technology on these hardware resources, to directly deploy a plurality of containers in the plurality of bare metal servers. It should be noted that the plurality of bare metal servers included in the bare metal server resource pool may also be understood as a plurality of cloud instances included in the bare metal server resource pool.
   For the plurality of bare metal servers included in the bare metal server resource pool, any bare metal server may be considered as a container creation environment. As shown in FIG. 3 (FIG. 3 is a diagram of another structure of a cloud instance according to an embodiment of this application), for any bare metal server in the plurality of bare metal servers, the cloud management platform may deploy a service component in the bare metal server. Therefore, the cloud management platform may manage one or more containers in the bare metal server in a unified manner by using the service component.
(3) For the physical server resource pool, the physical server resource pool may include a plurality of physical servers. Components such as a CPU, a GPU, a memory, and a network interface card of the plurality of physical servers are resources in the physical server resource pool. The cloud management platform may implement a virtualization technology on these hardware resources, to directly deploy a plurality of containers in the plurality of physical servers. It should be noted that the plurality of physical servers included in the physical server resource pool may also be understood as a plurality of cloud instances included in the physical server resource pool.
   For the plurality of physical servers included in the physical server resource pool, any physical server may be considered as a container creation environment. As shown in FIG. 4 (FIG. 4 is a diagram of another structure of a cloud instance according to an embodiment of this application), for any physical server in the plurality of physical servers, the cloud management platform may deploy a service component in the physical server. Therefore, the cloud management platform may manage one or more containers in the physical server in a unified manner by using the service component.
(4) For the micro virtual machine resource pool, the micro virtual machine resource pool may include a plurality of physical servers. Components such as a CPU, a GPU, a memory, and a network interface card of the plurality of physical servers are resources in the micro virtual machine resource pool. The cloud management platform may implement a virtualization technology on these hardware resources, to deploy a plurality of micro virtual machines in the plurality of physical servers and deploy a plurality of containers in the plurality of micro virtual machines. It should be noted that the plurality of micro virtual machines included in the micro virtual machine resource pool may also be understood as a plurality of cloud instances included in the micro virtual machine resource pool.

For the plurality of micro virtual machines included in the micro virtual machine resource pool, any micro virtual machine may be considered as a container creation environment. As shown in FIG. 5 (FIG. 5 is a diagram of a structure of a cloud instance according to an embodiment of this application), for any physical server in the plurality of physical servers, the cloud management platform may deploy a service component in the physical server, and then deploy the plurality of micro virtual machines by using the service component. For any micro virtual machine in the plurality of micro virtual machines, the cloud management platform may deploy one or more containers in the micro virtual machine by using the service component. In other words, the cloud management platform may manage the one or more containers in the micro virtual machine in a unified manner by using the service component.

Further, a plurality of prewarming levels are set on the cloud management platform, and the plurality of prewarming levels indicate a plurality of (types of) prewarming degrees of a cloud instance, namely, a plurality of prewarming states of the cloud instance. In this case, for any resource pool in the plurality of resource pools, the cloud management platform may enable a plurality of cloud instances included in the resource pool to correspond to at least two of the plurality of prewarming levels, in other words, the cloud management platform may enable the plurality of cloud instances included in the resource pool to be prewarmed to at least two degrees. The following separately describes the plurality of prewarming levels.
(1) Shutdown prewarming For any resource pool, after creating a cloud instance in the resource pool, the cloud management platform may set the cloud instance to a shutdown state, so that a cloud instance corresponding to a prewarming level of shutdown prewarming can be obtained. In this case, after receiving a request from the tenant, if the cloud management platform selects the cloud instance corresponding to the prewarming level of shutdown prewarming, the cloud management platform may start the cloud instance, load, in the cloud instance, a service component and tenant information needed for creating the container, and then create the container in the cloud instance based on the service component and the tenant information.
(2) Non-directional prewarming For any resource pool, after creating a cloud instance in the resource pool, the cloud management platform may set the cloud instance to a startup state (an incomplete startup state), but does not load a service component and tenant information needed for creating the container, so that a cloud instance corresponding to a prewarming level of non-directional prewarming can be obtained. In this case, after receiving a request from the tenant, if the cloud management platform selects the cloud instance corresponding to the prewarming level of non-directional prewarming, the cloud management platform may load the service component and the tenant information in the cloud instance (in this case, the cloud instance is close to a complete startup state), and then create the container in the cloud instance based on the service component and the tenant information.
(3) Service prewarming For any resource pool in the virtual machine resource pool, the bare metal server resource pool, and the physical server resource pool, after creating a cloud instance in the resource pool, the cloud management platform may enable the cloud instance to load a service component (in this case, the cloud instance is in an incomplete startup state), so that a cloud instance corresponding to a prewarming level of service prewarming can be obtained. In this case, after receiving a request from the tenant, if the cloud management platform selects the cloud instance corresponding to the prewarming level of service prewarming, the cloud management platform may further load tenant information in the cloud instance, and then create the container in the cloud instance based on the service component and the tenant information.
(4) Directional prewarming For any resource pool, after creating a cloud instance in the resource pool, the cloud management platform may enable the cloud instance to load a service component and tenant information (in this case, the cloud instance is close to a complete startup state), so that a cloud instance corresponding to a prewarming level of directional prewarming can be obtained. In this case, after receiving a request from the tenant, if the cloud management platform selects the cloud instance corresponding to the prewarming level of directional prewarming, the cloud management platform may create the container in the cloud instance based on the service component and the tenant information.

It should be understood that, in any resource pool, a value of a quantity of cloud instances corresponding to a prewarming level may be predicted by the cloud management platform by using a machine learning algorithm (for example, an LSTM algorithm) or a control theory (for example, an ARIMA algorithm), and the cloud instance corresponding to the prewarming level is deployed in the resource pool based on the value. This is not limited herein.

It can be learned that the cloud management platform provides a hierarchical prewarming mechanism for the cloud instance in the resource pool. The mechanism includes the shutdown prewarming, the non-directional prewarming, the service prewarming, the directional prewarming, and the like that are sorted in ascending order of levels. It can be learned from the foregoing descriptions of the four prewarming levels that a prewarming degree of the cloud instance indicated by the shutdown prewarming is lower than a prewarming degree of the cloud instance indicated by the non-directional prewarming, and the prewarming degree of the cloud instance indicated by the non-directional prewarming is lower than a prewarming degree of the cloud instance indicated by the service prewarming, the prewarming degree of the cloud instance indicated by the service prewarming is lower than a prewarming degree of the cloud instance indicated by the directional prewarming. In other words, a cloud instance corresponding to a lower prewarming level has a lower prewarming degree, longer container creation time (a slower container creation speed), but lower operation costs. On the contrary, a cloud instance corresponding to a higher prewarming level has a higher prewarming degree, shorter container creation time (a faster container creation speed), but higher operation costs.

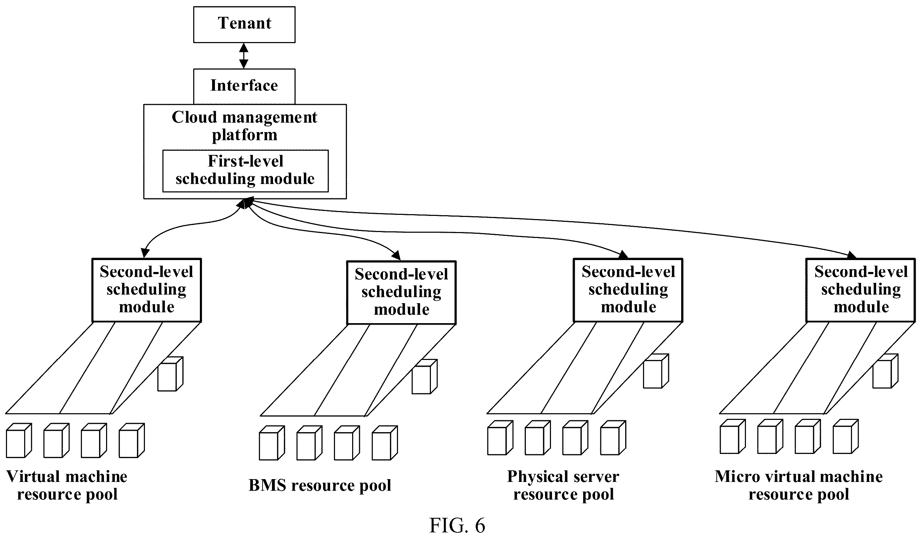

It should be noted that the cloud management platform may have a two-level scheduling mechanism. First-level scheduling is selecting a resource pool from a plurality of resource pools, and second-level scheduling is selecting a cloud instance from a plurality of cloud instances in the resource pool. Based on this, the cloud management platform sets corresponding scheduling modules for the mechanism. Therefore, the cloud management platform may have a plurality of structures: (1) In the structure shown in FIG. 1, a first-level scheduling module and a second-level scheduling module that are set by the cloud management platform are centrally deployed inside the cloud management platform, and the service component is deployed outside the cloud management platform as an extension (a part) of the cloud management platform, in other words, deployed in the cloud instance in the resource pool, and is configured to manage the container. (2) In a structure shown in FIG. 6 (FIG. 6 is a diagram of another structure of a cloud service system according to an embodiment of this application), a first-level scheduling module set by the cloud management platform is deployed inside the cloud management platform, and a second-level scheduling module (which may be presented as a scheduler) and the service component are deployed outside the cloud management platform as an extension (a part) of the cloud management platform. The second-level scheduling module is deployed in each resource pool and is configured to manage the cloud instance. The service component is deployed in the cloud instance in the resource pool and is configured to manage the container. During actual application, the structure of the cloud management platform may be set based on an actual requirement. This is not limited herein.

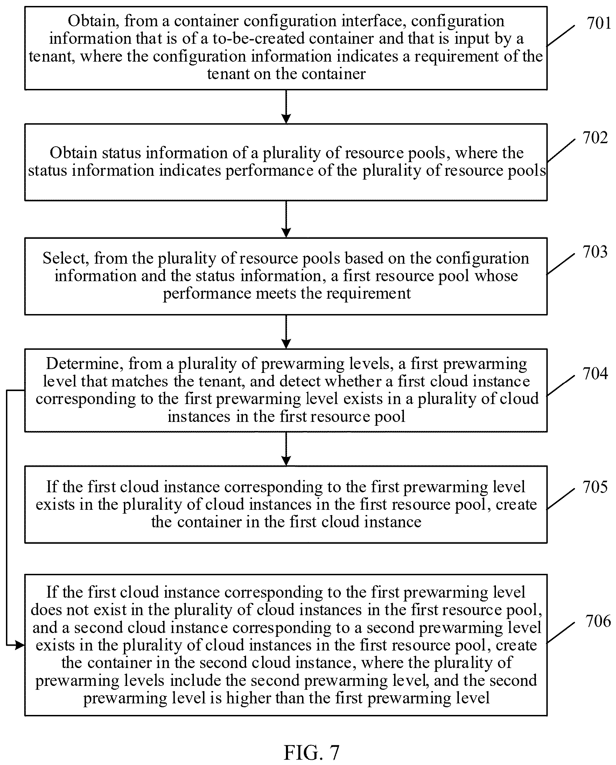

To further understand a working procedure of the cloud management platform, the following further describes the working procedure with reference to FIG. 7. FIG. 7 shows a container management method based on a cloud management platform according to an embodiment of this application. The method may be implemented by the cloud management platform. The method includes the following steps.

701: Obtain, from a container configuration interface, configuration information that is of a to-be-created container and that is input by a tenant, where the configuration information indicates a requirement of the tenant on the container.

In this embodiment, when the tenant needs to create the container, the cloud management platform may provide the container configuration interface (for example, a configuration input bar of a container creation interface) for a client used by the tenant. Then, the tenant may send, via the client, the configuration information of the to-be-created container to the container configuration interface, so that the cloud management platform receives, through the container configuration interface, the configuration information sent by the client of the tenant. The configuration information indicates the requirement of the tenant on the container. The requirement of the tenant on the container may include at least one of the following: a specification of the container set by the tenant, a service level agreement (service level agreement, SLA) parameter of the container set by the tenant (for example, a startup latency of the container set by the tenant), a request level of the container set by the tenant, and the like.

702: Obtain status information of a plurality of resource pools, where the status information indicates performance of the plurality of resource pools.

After obtaining the configuration information of the container, the cloud management platform may determine, based on the configuration information, that the container needs to be created for the tenant. Then, the cloud management platform may obtain the status information of the plurality of resource pools managed by the cloud management platform. The status information indicates the performance of the plurality of resource pools. The performance of the plurality of resource pools includes at least one of the following: (available) capacities of the plurality of resource pools, container creation time of the plurality of resource pools, and capacity expansion speeds of the plurality of resource pools, average resource costs of the plurality of resource pools, maximum concurrency of the plurality of resource pools, and the like.

It should be understood that, in this embodiment, that step 702 is performed after step 701 is merely used as an example for description, and does not constitute a limitation on an execution sequence of step 701 and step 702. During actual application, step 701 and step 702 may be performed in no particular sequence. For example, step 702 may be performed before step 701. In other words, the cloud management platform may first obtain the status information of the plurality of resource pools, and then directly perform step 703 after receiving the configuration information of the container.

703: Select, from the plurality of resource pools based on the configuration information and the status information, a first resource pool whose performance meets the requirement.

After obtaining the configuration information of the container and the status information of the plurality of resource pools, the cloud management platform may parse the configuration information of the container, to determine the requirement of the tenant on the container, and parse the status information of the plurality of resource pools, to determine the performance of the plurality of resource pools. Then, the cloud management platform may select, from the plurality of resource pools, the first resource pool whose performance can meet the requirement of the tenant on the container. In this case, the cloud management platform may complete a container creation task of the tenant in the first resource pool.

Specifically, the cloud management platform manages the plurality of resource pools of different types, and may select the first resource pool from the plurality of resource pools in the following plurality of manners.
(1) For a resource pool, a requirement on the resource pool may be keeping an available capacity (which may also be referred to as an available resource) of the resource pool greater than or equal to a preset capacity threshold (a value of the threshold may be set based on an actual requirement, and this is not limited herein). In this case, the cloud management platform may determine, based on the specification of the container needed by the tenant and an existing available capacity of the resource pool, whether a remaining available capacity of the resource pool is greater than or equal to the preset capacity threshold after the container needed by the tenant is deployed in the resource pool. If the remaining available capacity of the resource pool is greater than or equal to the preset capacity threshold, the resource pool may be directly determined as the first resource pool. Based on this, the cloud management platform may complete the container creation task of the tenant in the first resource pool.
   For example, it is assumed that, for a physical server resource pool, an available capacity of the physical server resource pool needs to be kept at 50% all the time. It is assumed that the specification of the container set by the tenant occupies 1% of a capacity of the resource pool, and an existing available capacity of the physical server resource pool is 53%. In this case, the cloud management platform may determine that a remaining available capacity of the physical server resource pool is 52% after the container needed by the tenant is deployed in the physical server resource pool. Therefore, the cloud management platform may determine that the physical server resource pool is an appropriate resource pool for completing the container creation task of the tenant.
(2) Because the cloud management platform has determined requirements such as the specification and the startup latency of the container set by the tenant, the cloud management platform may determine, from the plurality of resource pools based on performance indicators such as the available capacities of the plurality of resource pools and the container creation time of the plurality of resource pools, a resource pool that meets a series of conditions (for example, an available capacity of the resource pool can match the specification of the container needed by the user, and container creation time of the resource pool can match the startup latency of the container needed by the user) as the first resource pool. Based on this, the cloud management platform may complete the container creation task of the tenant in the first resource pool.

For example, it is assumed that the specification of the container needed by the tenant occupies 1% of a capacity of a resource pool, and the startup latency of the container needed by the tenant is within 1s. The cloud management platform manages a virtual machine resource pool, a bare metal server resource pool, and a physical server resource pool. Therefore, the cloud management platform may comprehensively determine, from the three resource pools based on these requirements, a specific resource pool whose available capacity, container creation time, and the like can meet both of these requirements, and determine the resource pool as an appropriate resource pool for completing the container creation task of the tenant.

It should be understood that, in this embodiment, the first resource pool is selected only in the foregoing two manners (1) and (2). During actual application, the cloud management platform may select the first resource pool in more manners. Details are not described herein one by one.

It should be further understood that, in this embodiment, the cloud management platform may parse the configuration information of the container by using a machine learning algorithm, for example, a K-means algorithm, a random forest algorithm, and an SVM algorithm, to determine the requirement of the tenant on the container. This is not limited herein.

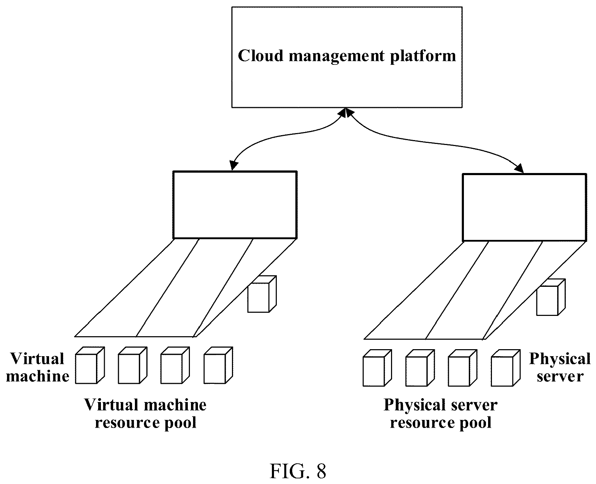

It should be further understood that, in this embodiment, a quantity of resource pools managed by the cloud management platform may be flexible and variable. For example, the resource pools managed by the cloud management platform usually include the foregoing four types of resource pools, for example, as shown in the example in FIG. 6. For example, the resource pools managed by the cloud management platform may alternatively be any combination of the four types of resource pools. For example, as shown in FIG. 8 (FIG. 8 is a diagram of another structure of a cloud service system according to an embodiment of this application), the cloud management platform manages only two types of resource pools: virtual machine resource pool and physical server resource pool. For example, the resource pools managed by the cloud management platform may further include another type of resource pool in addition to the foregoing four types of resource pools. This is not limited herein.

704: Determine, from a plurality of prewarming levels, a first prewarming level that matches the tenant, and detect whether a first cloud instance corresponding to the first prewarming level exists in a plurality of cloud instances in the first resource pool.

After determining the first resource pool, the cloud management platform may determine, from the plurality of prewarming levels, the first prewarming level that matches the tenant, where the first prewarming level is a prewarming level that can be used by the tenant.

Specifically, the cloud management platform may determine the first prewarming level from the plurality of prewarming levels in the following plurality of manners.
(1) The cloud management platform may determine, based on the configuration information of the container, the startup latency of the container needed by the tenant. Because a plurality of latency ranges that do not overlap each other are preset in the cloud management platform, the cloud management platform may obtain the plurality of preset latency ranges. Then, the cloud management platform may determine, from the plurality of latency ranges, a first latency range within which the startup latency of the container needed by the tenant falls (in other words, the first latency range includes the startup latency of the container needed by the tenant). Because a correspondence between the plurality of latency ranges and the plurality of prewarming levels is further preset in the cloud management platform, the cloud management platform may determine, from the plurality of prewarming levels based on the correspondence, the first prewarming level corresponding to the first latency range, namely, the prewarming level that can be used by the tenant.
   For example, the startup latency of the container needed by the tenant is 1s, and a latency range 1 of 0.1s to 0.5s, a latency range 2 of 0.6s to 1s, a latency range 3 of 1s to 1.5s, and a latency range 4 of 1.5s to 2s are preset in the cloud management platform. In addition, the following correspondences are further preset in the cloud management platform: a correspondence between the latency range 1 and a prewarming level 1 (directional prewarming), a correspondence between the latency range 2 and a prewarming level 2 (service prewarming), a correspondence between the latency range 3 and a prewarming level 3 (non-directional prewarming), and a correspondence between the latency range 4 and a prewarming level 4 (shutdown prewarming). In this case, the cloud management platform may determine that the startup latency of the container needed by the tenant falls within the latency range 2. Therefore, the cloud management platform may determine, as the prewarming level that can be used by the tenant, the prewarming level 2, namely, the service prewarming corresponding to the latency range 2.
(2) Because the tenant has registered with the cloud management platform and purchased a related service, the cloud management platform may comprehensively evaluate an importance degree of the tenant based on personal information and purchase history of the tenant. Because a plurality of tenant levels are preset in the cloud management platform, the cloud management platform may select a first tenant level for the tenant from the plurality of tenant levels based on the importance degree of the tenant. When the prewarming level that can be used by the tenant needs to be determined, the cloud management platform may first obtain the first tenant level of the tenant. Because a correspondence between the plurality of tenant levels and the plurality of prewarming levels is further preset in the cloud management platform, the cloud management platform may determine, from the plurality of prewarming levels based on the correspondence, the first prewarming level corresponding to the first tenant level, namely, the prewarming level that can be used by the tenant.
   For example, because a tenant level 1, a tenant level 2, a tenant level 3, a tenant level 4, and a tenant level 5 are preset in the cloud management platform, assuming that the importance degree of the tenant is high, the cloud management platform sets a level of the tenant to the tenant level 1. In addition, the following correspondences are further preset in the cloud management platform: a correspondence between the tenant level 1 and the tenant level 2 and a prewarming level 1 (directional prewarming), a correspondence between the tenant level 3 and a prewarming level 2 (service prewarming), a correspondence between the tenant level 4 and a prewarming level 3 (non-directional prewarming), and a correspondence between the tenant level 5 and a prewarming level 4 (shutdown prewarming). In this case, because the level of the tenant is the tenant level 1, the cloud management platform may determine, as the prewarming level that can be used by the tenant, the prewarming level 1, namely, the directional prewarming corresponding to the tenant level 1.
(3) Generally, the cloud management platform may alternatively set a trustlist including a plurality of tenants, to indicate particularity of the plurality of tenants. If the tenant is in the trustlist, the cloud management platform may determine, from the plurality of prewarming levels, the first prewarming level corresponding to the trustlist, namely, the prewarming level that can be used by the tenant.

For example, because the cloud management platform sets that the tenant in the trustlist can use a prewarming level 1, if the tenant is in the trustlist, the cloud management platform may determine the prewarming level 1, namely, the directional prewarming, as the prewarming level that can be used by the tenant.

After obtaining the first prewarming level, because the first resource pool includes a plurality of cloud instances corresponding to at least one prewarming level, the cloud management platform may determine, from the plurality of cloud instances, whether the first cloud instance corresponding to the first prewarming level exists.

It should be understood that, in this embodiment, the cloud management platform may determine the first prewarming level in a plurality of manners such as the manners (1), (2), and (3). During actual application, the cloud management platformmay alternatively determine the first prewarming level in another manner. Further, the plurality of manners such as the manners (1), (2), and (3) may be combined for use. Details are not described herein.

705: If the first cloud instance corresponding to the first prewarming level exists in the plurality of cloud instances in the first resource pool, create the container in the first cloud instance.

706: If the first cloud instance corresponding to the first prewarming level does not exist in the plurality of cloud instances in the first resource pool, and a second cloud instance corresponding to a second prewarming level exists in the plurality of cloud instances in the first resource pool, create the container in the second cloud instance, where the plurality of prewarming levels include the second prewarming level, and the second prewarming level is higher than the first prewarming level.

If the first cloud instance corresponding to the first prewarming level exists in the plurality of cloud instances in the first resource pool, the cloud management platform starts the first cloud instance and creates the container in the first cloud instance. In this case, the cloud management platform deploys, in the first cloud instance in the first resource pool, the container needed by the tenant, which is equivalent to successfully completing the container creation task of the tenant.

If the first cloud instance corresponding to the first prewarming level does not exist in the plurality of cloud instances in the first resource pool, the cloud management platform allows the tenant to be upward compatible with a prewarming level. To be specific, the cloud management platform determines the second prewarming level higher than the first prewarming level, and determines whether the second cloud instance corresponding to the second prewarming level exists in the plurality of cloud instances in the first resource pool. If the second cloud instance corresponding to the second prewarming level exists in the plurality of cloud instances in the first resource pool, the cloud management platform starts the second cloud instance and creates the container in the second cloud instance. In this case, the cloud management platform deploys, in the second cloud instance in the first resource pool, the container needed by the tenant, which is equivalent to successfully completing the container creation task of the tenant.

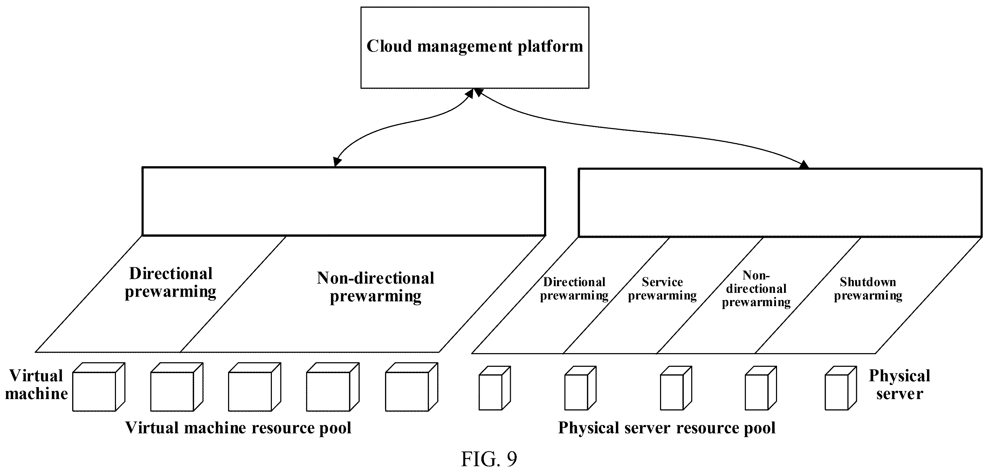

For example, as shown in FIG. 9 (FIG. 9 is a diagram of another structure of a cloud service system according to an embodiment of this application), it is assumed that the cloud management platform manages two types of resource pools: virtual machine resource pool and physical server resource pool. The cloud management platform may prewarm a plurality of virtual machines in the virtual machine resource pool, so that some virtual machines correspond to the directional prewarming, and another virtual machine corresponds to the non-directional prewarming. Similarly, the cloud management platform may prewarm a plurality of cloud instances in the physical server resource pool, so that some physical servers correspond to the directional prewarming, another physical server corresponds to the service prewarming, another physical server corresponds to the non-directional prewarming, and another physical server corresponds to the shutdown prewarming.

After determining that a container needs to be created for a tenant, the cloud management platform may select, for the tenant, an appropriate resource pool and a prewarming level that can be used by the tenant. In a case, assuming that the cloud management platform determines that the virtual machine resource pool is the appropriate resource pool and that the prewarming level that can be used by the tenant is the directional prewarming, the cloud management platform may directly select, from the virtual machine resource pool, a virtual machine corresponding to the directional prewarming, and create the container of the tenant in the virtual machine. In another case, assuming that the cloud management platform determines that the virtual machine resource pool is the appropriate resource pool and the prewarming level that can be used by the tenant is the service prewarming, the cloud management platform is upward compatible with the prewarming level, selects a virtual machine corresponding to the directional prewarming, and creates the container of the tenant in the virtual machine.

In embodiments of this application, when a tenant needs to create a container, the tenant may input configuration information of the to-be-created container to a container configuration interface provided by a cloud management platform, where the configuration information indicates a requirement of the tenant on the container. After receiving the configuration information of the container, the cloud management platform may obtain status information of a plurality of resource pools, where the status information indicates performance of the plurality of resource pools. Then, the cloud management platform may select, from the plurality of resource pools based on the configuration information of the container and the status information of the plurality of resource pools, a first resource pool whose performance meets the requirement of the tenant on the container. Then, the cloud management platform may determine, from a plurality of prewarming levels, a first prewarming level that matches the tenant. If a first cloud instance corresponding to the first prewarming level exists in a plurality of cloud instances in the first resource pool, the cloud management platform creates the container in the first cloud instance. In this case, the cloud management platform may successfully create the container needed by the tenant. In the foregoing process, the cloud management platform manages the plurality of resource pools of different types, and a plurality of cloud instances included in each resource pool have been prewarmed to at least one degree (in other words, the plurality of cloud instances included in each resource pool correspond to at least one prewarming level). After determining that the tenant needs to create the container, the cloud management platform may select an appropriate resource pool (namely, the first resource pool) for the tenant, and select, from a plurality of cloud instances in the resource pool, a cloud instance (namely, the first cloud instance) corresponding to a prewarming level that can be used by the tenant (namely, the first prewarming level). Because the cloud instance has been prewarmed to a specific degree but is not completely started, the cloud management platform can quickly and completely start the cloud instance and create the container. This ensures a container creation speed, and can further reduce operation costs of the cloud management platform.

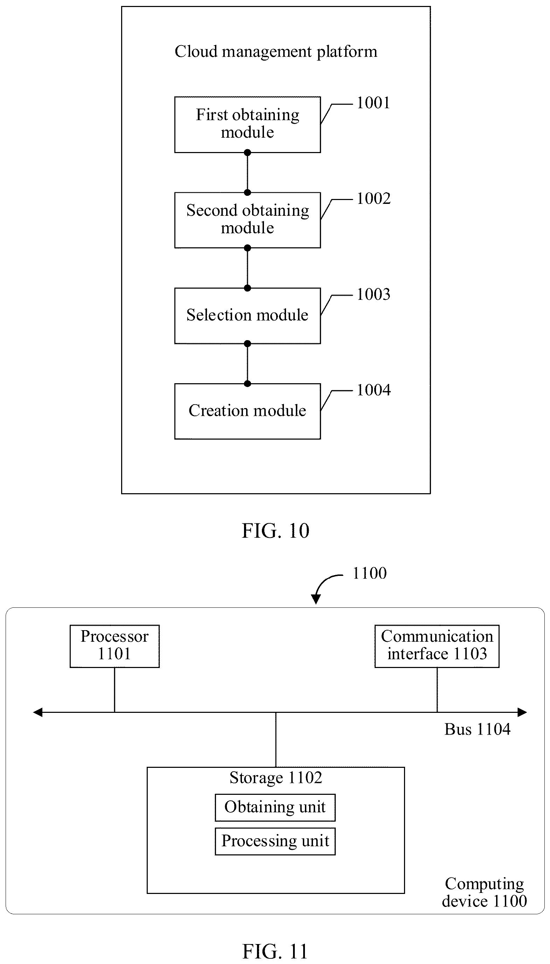

The foregoing is detailed descriptions of the container management method based on the cloud management platform provided in embodiments of this application. The following describes the cloud management platform provided in embodiments of this application. FIG. 10 is a diagram of a structure of a cloud management platform according to an embodiment of this application. As shown in FIG. 10, the cloud management platform is configured to manage an infrastructure that provides a cloud service, the infrastructure includes a plurality of resource pools, each resource pool includes a plurality of cloud instances corresponding to at least one of a plurality of prewarming levels, the plurality of prewarming levels indicate a plurality of prewarming degrees of cloud instances, and the cloud management platform includes:
a first obtaining module 1001, configured to obtain, from a container configuration interface, configuration information that is of a to-be-created container and that is input by a tenant, where the configuration information indicates a requirement of the tenant on the container;
a second obtaining module 1002, configured to obtain status information of the plurality of resource pools, where the status information indicates performance of the plurality of resource pools;
a selection module 1003, configured to select, from the plurality of resource pools based on the configuration information and the status information, a first resource pool whose performance meets the requirement; and
a creation module 1004, configured to: determine, from the plurality of prewarming levels, a first prewarming level that matches the tenant, and if a first cloud instance corresponding to the first prewarming level exists in a plurality of cloud instances in the first resource pool, create the container in the first cloud instance.

In embodiments of this application, when the tenant needs to create the container, the tenant may input the configuration information of the to-be-created container to the container configuration interface provided by the cloud management platform, where the configuration information indicates the requirement of the tenant on the container. After receiving the configuration information of the container, the cloud management platform may obtain the status information of the plurality of resource pools, where the status information indicates the performance of the plurality of resource pools. Then, the cloud management platform may select, from the plurality of resource pools based on the configuration information of the container and the status information of the plurality of resource pools, the first resource pool whose performance meets the requirement of the tenant on the container. Then, the cloud management platform may determine, from the plurality of prewarming levels, the first prewarming level that matches the tenant. If the first cloud instance corresponding to the first prewarming level exists in the plurality of cloud instances in the first resource pool, the cloud management platform creates the container in the first cloud instance. In this case, the cloud management platform may successfully create the container needed by the tenant. In the foregoing process, the cloud management platform manages the plurality of resource pools of different types, and the plurality of cloud instances included in each resource pool have been prewarmed to at least one degree (in other words, the plurality of cloud instances included in each resource pool correspond to at least one prewarming level). After determining that the tenant needs to create the container, the cloud management platform may select an appropriate resource pool (namely, the first resource pool) for the tenant, and select, from a plurality of cloud instances in the resource pool, a cloud instance (namely, the first cloud instance) corresponding to a prewarming level that can be used by the tenant (namely, the first prewarming level). Because the cloud instance has been prewarmed to a specific degree but is not completely started, the cloud management platform can quickly and completely start the cloud instance and create the container. This ensures a container creation speed, and can further reduce operation costs of the cloud management platform.

In a possible implementation, the plurality of resource pools include at least two of the following: a virtual machine resource pool, a bare metal server resource pool, a physical server resource pool, and a micro virtual machine resource pool, where the virtual machine resource pool includes a plurality of virtual machines, the bare metal server resource pool includes a plurality of bare metal servers, the physical server resource pool includes a plurality of physical servers, and the micro virtual machine resource pool includes a plurality of micro virtual machines.

In a possible implementation, the plurality of prewarming levels include: directional prewarming, service prewarming, non-directional prewarming, and shutdown prewarming sorted in descending order of levels, where a prewarming degree of a cloud instance indicated by the directional prewarming is higher than a prewarming degree of a cloud instance indicated by the service prewarming, the prewarming degree of the cloud instance indicated by the service prewarming is higher than a prewarming degree of a cloud instance indicated by the non-directional prewarming, and the prewarming degree of the cloud instance indicated by the non-directional prewarming is higher than a prewarming degree of a cloud instance indicated by the shutdown prewarming.

In a possible implementation, the creation module 1004 is further configured to: if the first cloud instance corresponding to the first prewarming level does not exist in the plurality of cloud instances in the first resource pool, and a second cloud instance corresponding to a second prewarming level exists in the plurality of cloud instances in the first resource pool, create the container in the second cloud instance, where the plurality of prewarming levels include the second prewarming level, and the second prewarming level is higher than the first prewarming level.

In a possible implementation, the requirement includes a startup latency of the container, and the selection module 1003 is configured to: determine, from a plurality of latency ranges, a first latency range within which the startup latency falls; and determine, from the plurality of prewarming levels based on a correspondence between the plurality of latency ranges and the plurality of prewarming levels, the first prewarming level corresponding to the first latency range.

In a possible implementation, the selection module 1003 is configured to: obtain a first tenant level of the tenant, where the first tenant level indicates an importance degree of the tenant; and determine, from the plurality of prewarming levels based on a correspondence between a plurality of tenant levels and the plurality of prewarming levels, the first prewarming level corresponding to the first tenant level, where the plurality of tenant levels include the first tenant level.

In a possible implementation, the tenant is a tenant in a trustlist, and the selection module 1003 is configured to determine, from the plurality of prewarming levels, the first prewarming level corresponding to the trustlist.

In a possible implementation, the requirement includes at least one of the following: a specification of the container and the startup latency of the container.

In a possible implementation, the performance includes at least one of the following: capacities of the plurality of resource pools and container creation time of the plurality of resource pools.

It should be noted that, content such as information exchange between the modules/units of the foregoing apparatus and an implementation process is based on the same concept as the method embodiment of this application, and produces the same technical effects as those of the method embodiment of this application. For specific content, refer to the foregoing descriptions in the method embodiment of embodiments of this application. Details are not described herein again.

FIG. 11 is a diagram of a structure of a computing device according to an embodiment of this application. As shown in FIG. 11, the computing device 1100 (which may be configured to present the foregoing cloud management platform) includes a processor 1101, a storage 1102, a communication interface 1103, and a bus 1104. The processor 1101, the storage 1102, and the communication interface 1103 are coupled through a bus (not marked in the figure). The storage 1102 stores instructions. When executable instructions in the storage 1102 are executed, the computing device 1100 performs the method performed by the cloud management platform in the foregoing method embodiment.

The computing device 1100 may be one or more integrated circuits configured to implement the foregoing method, for example, one or more application specific integrated circuits (application specific integrated circuits, ASICs), one or more microprocessors (digital signal processors, DSPs), one or more field programmable gate arrays (field programmable gate arrays, FPGAs), or a combination of at least two of these integrated circuit forms. For another example, when the unit in the apparatus is implemented in a form of scheduling a program by a processing element, the processing element may be a general-purpose processor, for example, a central processing unit (central processing unit, CPU) or another processor that may invoke the program. For another example, the units may be integrated and implemented in a form of a system-on-a-chip (system-on-a-chip, SoC).

The processor 1101 may be a central processing unit (central processing unit, CPU), or may be another general-purpose processor, a digital signal processor (digital signal processor, DSP), an application specific integrated circuit (application specific integrated circuit, ASIC), a field programmable gate array (field programmable gate array, FPGA) or another programmable logic device, a transistor logic device, a hardware component, or any combination thereof. The general-purpose processor may be a microprocessor or any regular processor or the like.

The storage 1102 may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example but not limitative description, many forms of RAMs may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

The storage 1102 stores executable program code. The processor 1101 executes the executable program code to separately implement functions of modules such as the foregoing obtaining modules and a first deployment module, to implement the foregoing microservice management method based on the cloud management platform. In other words, the storage 1102 stores instructions for performing the foregoing microservice management method based on the cloud management platform.

The communication interface 1103 uses a transceiver module, for example, but not limited to, a network interface card or a transceiver, to implement communication between the computing device 1100 and another device or a communication network.

The bus 1104 may include a power bus, a control bus, a status signal bus, and the like, in addition to a data bus. The bus may be a peripheral component interconnect express (peripheral component interconnect express, PCIe) bus, an extended industry standard architecture (extended industry standard architecture, EISA) bus, a unified bus (unified bus, Ubus, or UB), a compute express link (compute express link, CXL), a cache coherent interconnect protocol (cache coherent interconnect for accelerators, CCIX), or the like. Buses may be classified into an address bus, a data bus, a control bus, and the like.

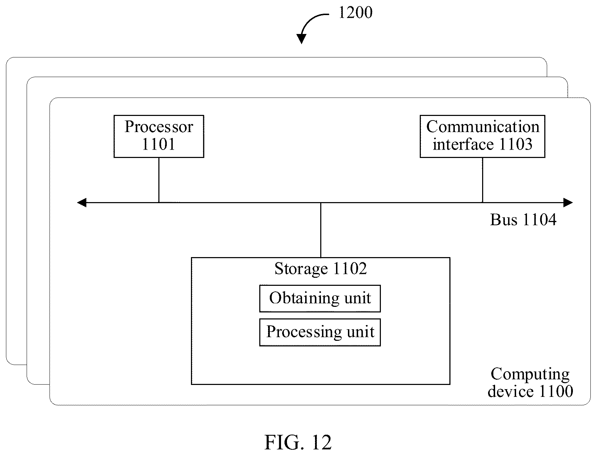

FIG. 12 is a diagram of a structure of a computing device cluster according to an embodiment of this application. As shown in FIG. 12, the computing device cluster 1200 includes at least one computing device 1100.

As shown in FIG. 12, the computing device cluster 1200 includes at least one computing device 1100. A storage 1102 in the one or more computing devices 1100 in the computing device cluster 1200 may store same instructions for performing the foregoing container management method based on the cloud management platform.

In some possible implementations, the storage 1102 in the one or more computing devices 1100 in the computing device cluster 1200 may alternatively separately store some instructions for performing the foregoing container management method based on the cloud management platform. In other words, a combination of the one or more computing devices 1100 may jointly perform the foregoing container management method based on the cloud management platform.

It should be noted that storages 1102 in different computing devices 1100 in the computing device cluster 1200 may store different instructions, to separately perform some functions of the foregoing cloud management platform. In other words, the instructions stored in the storages 1102 in the different computing devices 1100 may implement functions of one or more of modules such as the first obtaining module, the second obtaining module, the selection module, and the creation module.

In some possible implementations, the one or more computing devices 1100 in the computing device cluster 1200 may be connected through a network. The network may be a wide area network, a local area network, or the like.

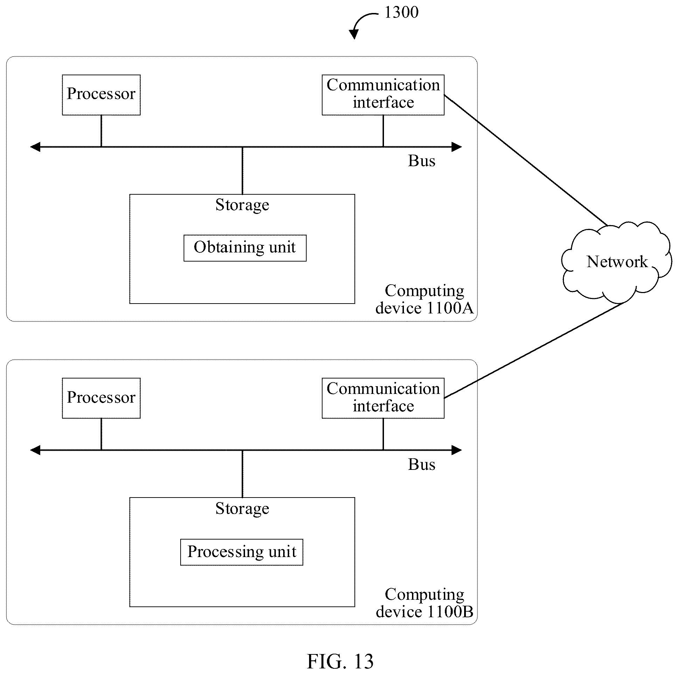

FIG. 13 is a diagram in which computer devices in a computer cluster are connected through a network according to an embodiment of this application. As shown in FIG. 13, two computing devices 1100A and 1100B are connected through a network. Specifically, each computing device is connected to the network through a communication interface in the computing device.

In a possible implementation, a storage in the computing device 1100A stores instructions for performing functions of modules such as the first obtaining module. In addition, a storage in the computing device 1100B stores instructions for performing functions of modules such as the second obtaining module, the selection module, and the creation module.

It should be understood that functions of the computing device 1100A shown in FIG. 13 may alternatively be completed by a plurality of computing devices. Similarly, functions of the computing device 1100B may alternatively be completed by a plurality of computing devices.

An embodiment of this application further relates to a computer storage medium. The computer-readable storage medium stores a program used for signal processing. When the program is run on a computer, the computer is enabled to perform the steps performed by the cloud management platform in the embodiment shown in FIG. 7.

An embodiment of this application further relates to a computer program product. The computer program product stores instructions, and when the instructions are executed by a computer, the computer is enabled to perform the steps performed by the cloud management platform in the embodiment shown in FIG. 7.

It may be clearly understood by a person skilled in the art that, for the purpose of convenient and brief description, for a detailed working process of the foregoing system, apparatus, and unit, refer to a corresponding process in the foregoing method embodiment. Details are not described herein again.

In the several embodiments provided in this application, it should be understood that the disclosed system, apparatus, and method may be implemented in another manner. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the current technology, or all or some of the technical solutions may be implemented in the form of a software product. The computer software product is stored in a storage medium and includes several instructions for instructing a computer device (which may be a personal computer, a server, or a network device) to perform all or some of the steps of the method described in embodiments of this application. The foregoing storage medium includes any medium that can store program code, for example, a USB flash drive, a removable hard disk, a read-only memory (ROM, read-only memory), a random access memory (RAM, random access memory), a magnetic disk, or an optical disc.

## Claims

1. A container management method based on a cloud management platform, wherein the cloud management platform is configured to manage an infrastructure that provides a cloud service, the infrastructure comprises a plurality of resource pools, each resource pool comprises a plurality of cloud instances corresponding to at least one of a plurality of prewarming levels, the plurality of prewarming levels indicate a plurality of prewarming degrees of cloud instances, and the method comprises:
obtaining, from a container configuration interface, configuration information that is of a to-be-created container and that is input by a tenant, wherein the configuration information indicates a requirement of the tenant on the container;
obtaining status information of the plurality of resource pools, wherein the status information indicates performance of the plurality of resource pools;
selecting, from the plurality of resource pools based on the configuration information and the status information, a first resource pool whose performance meets the requirement; and
determining, from the plurality of prewarming levels, a first prewarming level that matches the tenant, and if a first cloud instance corresponding to the first prewarming level exists in a plurality of cloud instances in the first resource pool, creating the container in the first cloud instance.

2. The method according to claim 1, wherein the plurality of resource pools comprise at least two of the following: a virtual machine resource pool, a bare metal server resource pool, a physical server resource pool, and a micro virtual machine resource pool, wherein the virtual machine resource pool comprises a plurality of virtual machines, the bare metal server resource pool comprises a plurality of bare metal servers, the physical server resource pool comprises a plurality of physical servers, and the micro virtual machine resource pool comprises a plurality of micro virtual machines.

3. The method according to claim 1 or 2, wherein the plurality of prewarming levels comprise: directional prewarming, service prewarming, non-directional prewarming, and shutdown prewarming sorted in descending order of levels, wherein a prewarming degree of a cloud instance indicated by the directional prewarming is higher than a prewarming degree of a cloud instance indicated by the service prewarming, the prewarming degree of the cloud instance indicated by the service prewarming is higher than a prewarming degree of a cloud instance indicated by the non-directional prewarming, and the prewarming degree of the cloud instance indicated by the non-directional prewarming is higher than a prewarming degree of a cloud instance indicated by the shutdown prewarming.

4. The method according to any one of claims 1 to 3, wherein the method further comprises:
if the first cloud instance corresponding to the first prewarming level does not exist in the plurality of cloud instances in the first resource pool, and a second cloud instance corresponding to a second prewarming level exists in the plurality of cloud instances in the first resource pool, creating the container in the second cloud instance, wherein the plurality of prewarming levels comprise the second prewarming level, and the second prewarming level is higher than the first prewarming level.

5. The method according to any one of claims 1 to 4, wherein the requirement comprises a startup latency of the container, and the determining, from the plurality of prewarming levels, the first prewarming level that matches the tenant comprises:
determining, from a plurality of latency ranges, a first latency range within which the startup latency falls; and
determining, from the plurality of prewarming levels based on a correspondence between the plurality of latency ranges and the plurality of prewarming levels, the first prewarming level corresponding to the first latency range.

6. The method according to any one of claims 1 to 4, wherein the determining, from the plurality of prewarming levels, the first prewarming level that matches the tenant comprises:
obtaining a first tenant level of the tenant, wherein the first tenant level indicates an importance degree of the tenant; and
determining, from the plurality of prewarming levels based on a correspondence between a plurality of tenant levels and the plurality of prewarming levels, the first prewarming level corresponding to the first tenant level, wherein the plurality of tenant levels comprise the first tenant level.

7. The method according to any one of claims 1 to 4, wherein the tenant is a tenant in a trustlist, and the determining, from the plurality of prewarming levels, the first prewarming level that matches the tenant comprises:
determining, from the plurality of prewarming levels, the first prewarming level corresponding to the trustlist.

8. The method according to any one of claims 1 to 7, wherein the requirement comprises at least one of the following: a specification of the container and the startup latency of the container.

9. The method according to any one of claims 1 to 8, wherein the performance comprises at least one of the following: capacities of the plurality of resource pools and container creation time of the plurality of resource pools.

10. A cloud management platform, wherein the cloud management platform is configured to manage an infrastructure that provides a cloud service, the infrastructure comprises a plurality of resource pools, each resource pool comprises a plurality of cloud instances corresponding to at least one of a plurality of prewarming levels, the plurality of prewarming levels indicate a plurality of prewarming degrees of cloud instances, and the cloud management platform comprises:
a first obtaining module, configured to obtain, from a container configuration interface, configuration information that is of a to-be-created container and that is input by a tenant, wherein the configuration information indicates a requirement of the tenant on the container;
a second obtaining module, configured to obtain status information of the plurality of resource pools, wherein the status information indicates performance of the plurality of resource pools;
a selection module, configured to select, from the plurality of resource pools based on the configuration information and the status information, a first resource pool whose performance meets the requirement; and
a creation module, configured to: determine, from the plurality of prewarming levels, a first prewarming level that matches the tenant, and if a first cloud instance corresponding to the first prewarming level exists in a plurality of cloud instances in the first resource pool, create the container in the first cloud instance.

11. The cloud management platform according to claim 10, wherein the plurality of resource pools comprise at least two of the following: a virtual machine resource pool, a bare metal server resource pool, a physical server resource pool, and a micro virtual machine resource pool, wherein the virtual machine resource pool comprises a plurality of virtual machines, the bare metal server resource pool comprises a plurality of bare metal servers, the physical server resource pool comprises a plurality of physical servers, and the micro virtual machine resource pool comprises a plurality of micro virtual machines.

12. The cloud management platform according to claim 10 or 11, wherein the plurality of prewarming levels comprise: directional prewarming, service prewarming, non-directional prewarming, and shutdown prewarming sorted in descending order of levels, wherein a prewarming degree of a cloud instance indicated by the directional prewarming is higher than a prewarming degree of a cloud instance indicated by the service prewarming, the prewarming degree of the cloud instance indicated by the service prewarming is higher than a prewarming degree of a cloud instance indicated by the non-directional prewarming, and the prewarming degree of the cloud instance indicated by the non-directional prewarming is higher than a prewarming degree of a cloud instance indicated by the shutdown prewarming.

13. The cloud management platform according to any one of claims 10 to 12, wherein the creation module is further configured to: if the first cloud instance corresponding to the first prewarming level does not exist in the plurality of cloud instances in the first resource pool, and a second cloud instance corresponding to a second prewarming level exists in the plurality of cloud instances in the first resource pool, create the container in the second cloud instance, wherein the plurality of prewarming levels comprise the second prewarming level, and the second prewarming level is higher than the first prewarming level.

14. The cloud management platform according to any one of claims 10 to 13, wherein the requirement comprises a startup latency of the container, and the selection module is configured to:
determine, from a plurality of latency ranges, a first latency range within which the startup latency falls; and
determine, from the plurality of prewarming levels based on a correspondence between the plurality of latency ranges and the plurality of prewarming levels, the first prewarming level corresponding to the first latency range.

15. The cloud management platform according to any one of claims 10 to 13, wherein the selection module is configured to:
obtain a first tenant level of the tenant, wherein the first tenant level indicates an importance degree of the tenant; and
determine, from the plurality of prewarming levels based on a correspondence between a plurality of tenant levels and the plurality of prewarming levels, the first prewarming level corresponding to the first tenant level, wherein the plurality of tenant levels comprise the first tenant level.

16. The cloud management platform according to any one of claims 10 to 13, wherein the tenant is a tenant in a trustlist, and the selection module is configured to determine, from the plurality of prewarming levels, the first prewarming level corresponding to the trustlist.

17. The cloud management platform according to any one of claims 10 to 16, wherein the requirement comprises at least one of the following: a specification of the container and the startup latency of the container.

18. The cloud management platform according to any one of claims 10 to 17, wherein the performance comprises at least one of the following: capacities of the plurality of resource pools and container creation time of the plurality of resource pools.

19. A cloud service system, wherein the cloud service system comprises a cloud management platform and an infrastructure that provides a cloud service, the cloud management platform is configured to manage the infrastructure, the infrastructure comprises a plurality of resource pools, each resource pool comprises a plurality of cloud instances corresponding to at least one of a plurality of prewarming levels, the plurality of prewarming levels indicate a plurality of prewarming degrees of cloud instances, and the cloud management platform is configured to:
obtain, from a container configuration interface, configuration information that is of a to-be-created container and that is input by a tenant, wherein the configuration information indicates a requirement of the tenant on the container;
obtain status information of the plurality of resource pools, wherein the status information indicates performance of the plurality of resource pools;
select, from the plurality of resource pools based on the configuration information and the status information, a first resource pool whose performance meets the requirement; and
determine, from the plurality of prewarming levels, a first prewarming level that matches the tenant, and if a first cloud instance corresponding to the first prewarming level exists in a plurality of cloud instances in the first resource pool, create the container in the first cloud instance.

20. A computing device cluster, wherein the computing device cluster comprises at least one computing device, and each computing device comprises a processor and a storage, wherein
the storage is configured to store instructions; and
the processor is configured to enable, according to the instructions, the computing device cluster to perform the method according to any one of claims 1 to 9.

21. A computer storage medium, wherein the computer storage medium stores one or more instructions, and when the instructions are executed by one or more computers, the one or more computers are enabled to implement the method according to any one of claims 1 to 9.

22. A computer program product, wherein the computer program product stores instructions, and when the instructions are executed by a computer, the computer is enabled to implement the method according to any one of claims 1 to 9.
